# EUROPEAN PATENT APPLICATION

(11) **EP 4 667 076 A1**
(43) Date of publication of application: **24.12.2025**
(21) Application number: 25169283.6
(22) Date of filing: 08.04.2025
(51) Int. Cl.: A63F 13/73, H04L 9/00, G06Q 20/36

(54) **SYSTEM AND METHOD FOR CONNECTING BLOCKCHAIN WALLETS TO VIDEO GAMES**

(30) Priority: 21.06.2024 US 202418749995
(71) Applicant: Hyperplay Labs. Inc., Newark, DE 19702 (US)
(72) Inventor: Cantele, Jacob, Newark, 19702 (US); Cleary, Brett, Newark, 19702 (US)
(74) Representative: Aldridge, Christopher Simon

(57) **Abstract**

A device and method are provided for improving interactions between video games and blockchain wallets by establishing a connection between an external blockchain wallet and a video game client and by displaying an overlay on the video game client. A locally hosted server is exposed to the video game client and processes requests between the video game client and the external blockchain wallet. The local server also outputs data that is displayed in an overlay window.

## Description

### Technical Field

The present disclosure relates generally to video game tools and more particularly to enabling interactions between video games and external blockchain wallets.

### Background

Cryptocurrency wallets enable user interaction with blockchains and cryptographic primitives by generating public/private key pairs, creating public key cryptography signatures for authentication and transactions, tracking owned assets, and detecting fraud. Web3 games implement blockchain technology, often to establish ownership of in-game assets. For this reason, interaction with players' cryptocurrency wallets and the relevant blockchain is required by many web3 games.

Traditionally, web3 gaming has been limited to browser-based games where the wallet may be accessed via an extension with the EIP1193 provider exposed to the site through the window.ethereum global. This connection is, however, not available for desktop games.

To address the issue, some games utilize either an embedded wallet or a custodial wallet. An embedded wallet is deployed with the game and generates a private key, which is stored locally within the game files when the player initiates the game. This enables the game client to sign messages and transactions using the local private key. However, this method necessitates that the user place complete trust in the game for the management of their assets. In addition, not all game engines are equipped with comprehensive, user-friendly software development kits (SDKs) or plugins capable of performing the functions required for an embedded wallet.

Alternatively, a custodial wallet stores the private key on a centralized server managed by the game development team. This solution similarly requires users to fully trust the game developer, as the game developer controls their private key. Additionally, this approach exposes the user to the risk of potential attacks on the game developer's server.

### Summary

The present disclosure allows users to control their keys when using an external wallet. In particular, it allows users to trust a single entity for handling the users keys when interacting with an external wallet while in any video game. The present disclosure also provides an improved user experience by allowing a user to connect an external wallet to a single application instead of every single video game played by the user. Further, instead of requiring users to create a new wallet as in many of the custodial and embedded wallet solutions, the present disclosure allows a user to connect to an existing wallet.

The present disclosure provides improved interactions between video games and blockchain wallets by hosting a local server exposed to a video game client for passing requests between the video game client, an external blockchain wallet, and an overlay window displayed with the video game client.

As an exemplary benefit, the disclosure provides a computer device and method enabling a secure and efficient means for integrating blockchain wallet interactions with video games, simultaneously offering an enhanced user experience by maintaining immersive gameplay while performing cryptocurrency transactions.

While a number of features are described herein with respect to embodiments of the invention, features described with respect to a given embodiment also may be employed in connection with other embodiments. The following description and the annexed drawings set forth certain illustrative embodiments of the invention. These embodiments are indicative, however, of but a few of the various ways in which the principles of the invention may be employed. Other objects, advantages, and novel features according to aspects of the invention will become apparent from the following detailed description when considered in conjunction with the drawings.

### Brief Description of the Drawings

The drawings, which are not necessarily to scale, show various aspects of the invention in which similar reference numerals are used to indicate the same or similar parts in the various views.
FIG. 1 is a block diagram of an exemplary embodiment of a computer device for improving interactions between video games and blockchain wallets.
FIG. 2 is a block diagram of an exemplary embodiment of the computer device using DLL injection for displaying the overlay.
FIG. 3 is a block diagram of an exemplary embodiment of the computer device displaying a transparent window as the overlay.
FIG. 4 is an exemplary depiction of combined video game content showing the overlay window and graphical output from the video game client.
FIG. 5 is a block diagram of an exemplary embodiment of a method performed by processor circuitry for improving interactions between video games and blockchain wallets by establishing a connection between an external blockchain wallet and a video game client and by displaying an overlay on the video game client

The present invention is described below in detail with reference to the drawings. In the drawings, each element with a reference number is similar to other elements with the same reference number independent of any letter designation following the reference number. In the text, a reference number with a specific letter designation following the reference number refers to the specific element with the number and letter designation and a reference number without a specific letter designation refers to all elements with the same reference number independent of any letter designation following the reference number in the drawings.

### Detailed Description

The present disclosure provides a device and method for improving interactions between video games and blockchain wallets by establishing a connection between an external blockchain wallet and a video game client, and by displaying an overlay on the video game client. A locally hosted server is exposed to the video game client and processes requests between the video game client and the external blockchain wallet. The local server also outputs data that is displayed in an overlay window with graphics content from the video game client.

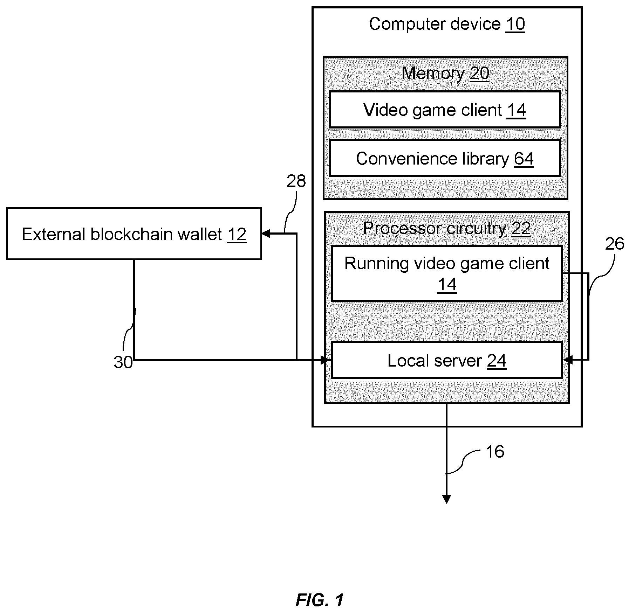

Turning to FIG. 1, a computer device 10 is shown for improving interactions between video games and blockchain wallets by establishing a connection between an external blockchain wallet 12 and a video game client 14 and by displaying an overlay 16 on the video game client 14. The computer device 10 includes memory 20 storing the video game client 14 and processor circuitry 22.

The processor circuitry 22 runs the video game client 14, hosts a local server 24 exposed to the running video game client 14, and handles requests between the video game client 14 and the external blockchain wallet 12.

In particular, the processor circuitry 22 runs (also referred to as executes or operates) the video game client 14 stored within the memory 20. Concurrently, it hosts a local server 24 that the running video game client 14 can access. This local server 24 is responsible for receiving requests from the video game client 14. These requests may include wallet requests 26 directed towards the external blockchain wallet 12. Upon receiving a wallet request 26, the local server 24 sends a wallet query 28 to the external blockchain wallet 12.

The external blockchain wallet 12 processes the wallet query 28 and sends back a response 30 to the local server 24. The local server 24 receives this response 30 and subsequently outputs overlay data 32 based on the received response 30. The processor circuitry 22 generates and outputs an overlay window 16 based on the overlay data 32.

The generated overlay window 16 is displayed on the video game client 14. For example, the overlay 16 may be rendered as a full-screen transparent window 50 that appears over the video game client 14 or that is injected into the video game's graphical output through methods such as DLL injection. This allows the video game client 14 to perform blockchain transactions and display related notifications without causing users to leave the gameplay environment.

Displaying the overlay window 16 on the video game client 14 may include outputting a signal to a display (not shown) by the computer device 10, such that the overlay window 16 is displayed on the display. The display (also referred to as a display device) may have various implementations. For example, the display may comprise any suitable device for displaying information, such as a liquid crystal display, light emitting diode display, a CRT display, an organic light emitting diode (OLED) display, a computer monitor, a television, a phone screen, or the like. The display may also include an interface (e.g., HDMI input, USB input, etc.) for receiving information to be displayed.

The local server 24 operates as an intermediary between the video game client and external blockchain wallet. The local server may be any suitable web server (also referred to as an HTTP server) hosted locally on the computer device using software. For example, the local server may run a JavaScript environment (such as an Express.js server).

The external blockchain wallet 12 may function as a secure storage medium for managing the cryptographic keys associated with blockchain transactions for a user. The external blockchain wallet may be any suitable digital wallet hosted externally on blockchain networks, utilizing software protocols. For example, the external blockchain wallet may operate on Ethereum and utilize wallet software such as MetaMask or similar decentralized application (dApp) interfaces.

The video game client 14 may be any suitable software application executed on a computing device. For example, the video game client may be developed using a game engine such as Unity or Unreal Engine. The video game client may provide the necessary graphical user interface (GUI) elements and control mechanisms for the user to interact with the game. The video game client may facilitate communication with the local server utilizing network protocols.

The processor circuitry 22 may additionally run an internet browser 40 including a browser extension 42. The browser extension 42 may be configured to access the external blockchain wallet 12, and the local server 24 may send the wallet query 28 to the external blockchain wallet 12 via the browser extension 42. For example, the cryptographic private keys may be stored in an encrypted vault file on the computer device 10 (i.e., the external blockchain wallet may be stored locally on the computer device 10). The browser extension 42 may sign the wallet query 28 (e.g., a requested blockchain transaction) using these cryptographic private keys. In this way, the external blockchain wallet 12 may be stored locally and used to sign transactions that will be processed by the blockchain.

As described above, the computer device 10 may use browser extensions 42, such as the MetaMask browser extension, to facilitate access to various blockchain wallets 12. This allows for wallet queries 28 originating from the video game client 14 to be effectively routed to the external blockchain wallet 12 by the browser extension 42. This arrangement leverages the familiar browser extension wallets, providing flexibility and compatibility with existing web3 wallets, while maintaining the separation of wallet management from the video game client 14.

The external blockchain wallet 12 may have various implementations. For example, the external blockchain wallet 12 may include any suitable software (with or without accompanying computer hardware) for securely managing cryptographic keys and executing blockchain transactions that is external to (i.e., separate from) the video game client. The external blockchain wallet 12 may be implemented as a browser extension, such as MetaMask, stored locally on a user's device. Alternatively, the external blockchain wallet 12 may be stored in the cloud and accessed through secure network protocols. The external blockchain wallet 12 may include software components that provide functionality for generating and storing cryptographic keys, signing transactions, and interfacing with blockchain networks. Instructions for performing the method described below may be executed by the external blockchain wallet 12. The external blockchain wallet 12 may communicate with the video game client through APIs, secure network connections, or any other suitable communication methods known in the art.

The overlay window 16 may be displayed with the output for the video game client 48, such that the overlay 16 is presented seamlessly within a gameplay interface for the video game client 14.

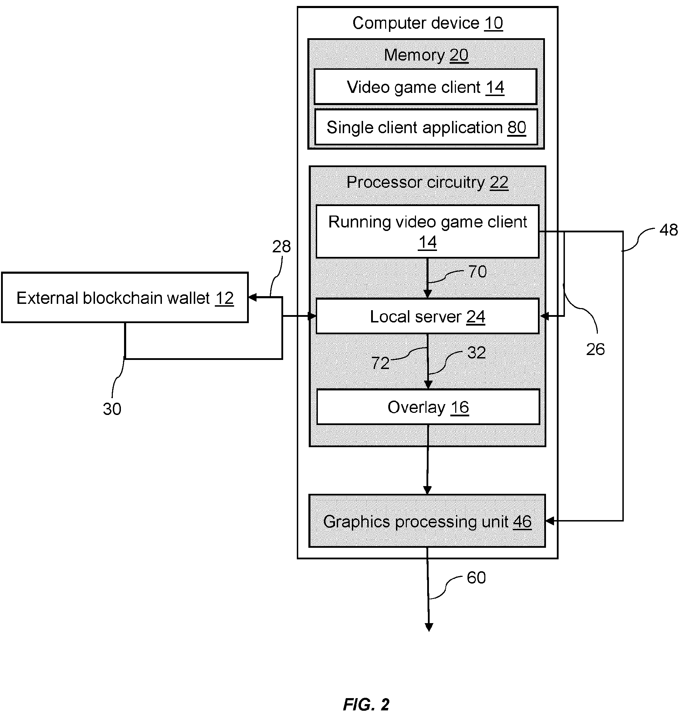

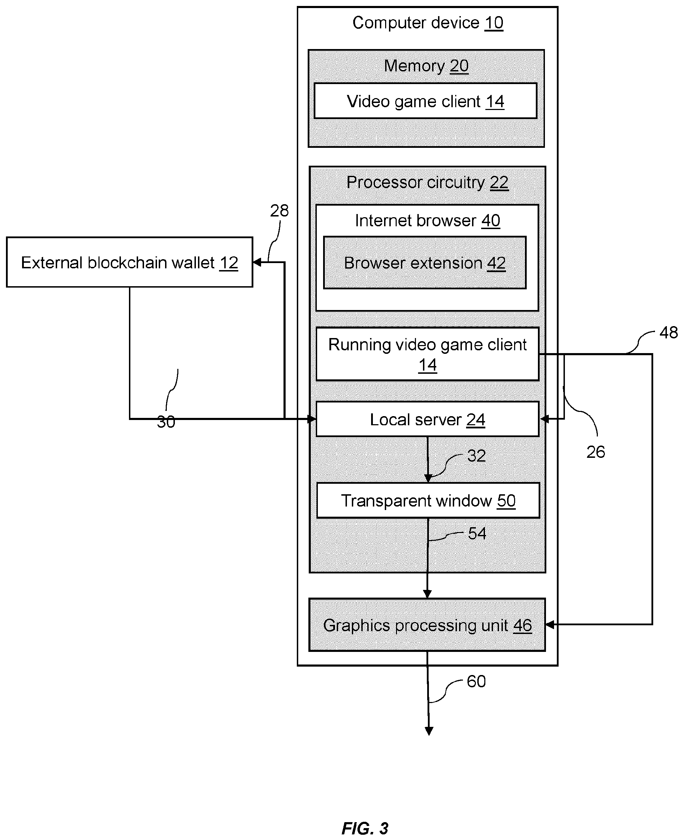

With exemplary reference to FIGS. 2 and 3, the overlay window 16 may be generated and displayed in conjunction with the graphical output 48 from the video game client 14. In one embodiment, the processor circuitry 22 renders a transparent window 50 based on the overlay data 32 output from the local server 24. The transparent window 50 may be rendered but not displayed. Rather, an image 54 (such as a bitmap) may be generated from the transparent window 50. This image 54 may then then be injected into the graphical output 48 of the video game client 14, such that the generated image 54 is displayed with the graphical output 48 from the video game client 14 as combined video game content 60.

The image 54 may be injected into the graphical output 48 from the video game client 14 using DLL (Dynamic Link Library) injection. For example, the generated image 54 may be injected directly into the graphical output 48 of the video game client through the manipulation of the graphical rendering pipeline for the video game client. This DLL injection may involve the introduction of custom code into the video game client, allowing for the insertion of the overlay 16 into the existing rendering loop of the graphical engine (such as DirectX or OpenGL) for the video game client 14.

For example, as shown in FIG. 2, the computer device 10 may include a graphics processing unit 46 for outputting the combined video game content 60. The graphics processing unit 46 may be included as part of the processor circuitry 22 or may be a separate unit. The combined video game content 60 may be received by the graphics processing unit 46 or the graphics processing unit 46 may combine the graphical output 48 from the video game client 14 with the overlay 16 to form the combined video game content 60.

The graphics processing unit (GPU) 46 may have various implementations. For example, the GPU 46 may include any suitable device, such as a shader core, a texture mapping unit (TMU), a render output unit (ROP), a frame buffer, or other suitable processing units. The GPU 30 may also include a non-transitory computer readable medium, such as graphics memory, which can be volatile memory like GDDR (Graphics Double Data Rate), a read-only memory (ROM), or other suitable memory types. Instructions for performing rendering and computational tasks may be stored in the non-transitory computer readable medium and executed by the GPU 30. The GPU 30 may be communicatively coupled to the memory 20, the processor circuitry 22, and other system components through a system bus, such as PCI Express (PCIe), a motherboard, or using any other suitable structure known in the art.

In another embodiment, the transparent window 50 may be displayed superimposed over the video game client, allowing for the visualization of the game interface while maintaining the transparency effect of the window. The transparent window 50 may be utilized to provide additional information, controls, or overlays that interact with or enhance the gaming experience, without fully obscuring the underlying video game client interface. The implementation of the transparent window 50 may include adjusting the opacity, size, and positioning parameters to suit various use cases and screen resolutions. The transparent window 50 may be rendered using graphical processing capabilities in conjunction with the video game client to ensure seamless integration and minimal impact on performance.

The processor circuitry 22 may generate the wallet query 28 by formatting (also referred to as translating) the received wallet request 26 using a convenience library 64. The convenience library 64 may comprise software components that facilitate the conversion of the wallet request 26 from a received format into a different format readable by the external blockchain wallet 12. By using the convenience library 64, the processor circuitry 22 may ensure that the wallet requests 26 received from the video game client 14 are the correct format for processing by the external blockchain wallet 12. For example, the convenience library 64 may be used to ensure that the wallet requests 26 conform to the specific protocols and data structures mandated by the external blockchain wallet 12. This translation of the wallet request 26 into the wallet query 28 may allow the video game client 14 to send high-level wallet requests without needing to manage the intricate details of blockchain communication protocols. This may allow for a more streamlined interaction between the video game client and the external blockchain wallet.

The processor circuitry 22 may also use a video game convenience library to format the wallet request 26 before the wallet request 26 is received by the local server 24. For example, the video game client 14 may use the video game convenience library to format a preliminary wallet request to generate the wallet request that is received by the local server 24. Like the convenience library 64, the video game convenience library may comprise software components for converting the preliminary wallet request into a wallet request 26 having a different format.

The convenience library 64 (and video game convenience library) may be any suitable software library. For example, the convenience library may be developed using programming languages such as C#, C++, or JavaScript. The convenience library may provide various modular functions and routines to streamline game development tasks. The convenience library may facilitate integration with external APIs and third-party services by using standard communication protocols.

With exemplary reference to FIG. 2, in addition to wallet requests 26, the local server 24 may additionally receive an overlay request 70 from the video game client 14. In response to the received overlay request 70, the local server 24 may output an overlay query 72 based on the overlay request 70. For example, the local server 24 may process the overlay request 70, converting it into an overlay query 72. The processor circuitry 22 may then generate the overlay window 16, such that the overlay window 16 includes graphical elements 76 based on the outputted overlay query 72.

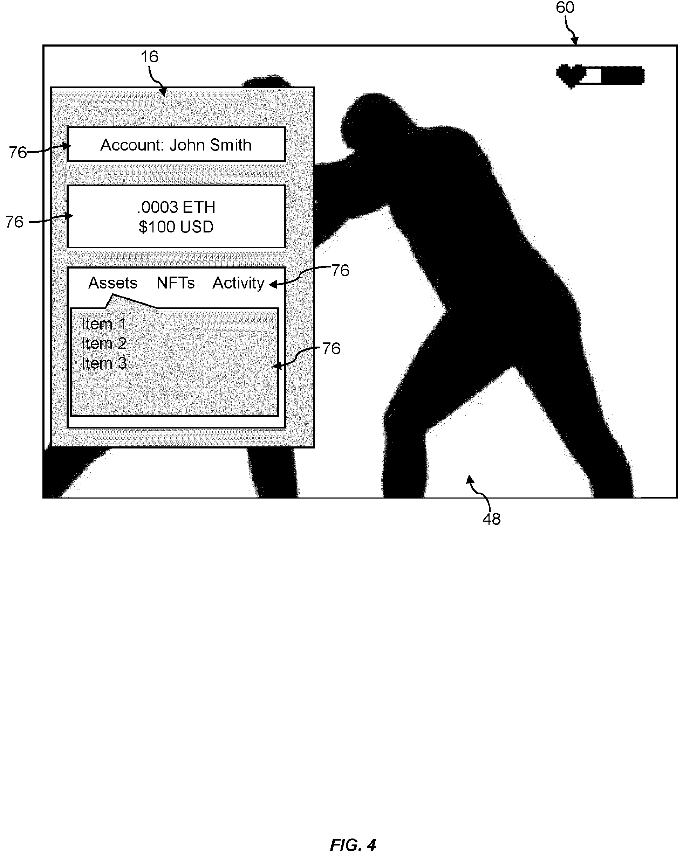

Turning to FIG. 4, the overlay window 16 may include various interactive and informational elements to enhance user engagement and facilitate blockchain transactions. These graphical elements 76 may include:
- Transaction Notifications: Alerts indicating the status of blockchain transactions-whether pending, successful, or failed.
- Wallet Creation Modals: Interfaces that guide the user through the process of creating a new blockchain wallet, including generating private/public key pairs.
- Wallet Import Modals: Interfaces allowing users to import an existing wallet by inputting the private key or mnemonic phrase.
- Wallet Connect Modals: Prompts for connecting an existing external blockchain wallet through methods such as QR code scanning or other authentication mechanisms.
- Webview Elements: Embedded browser windows within the overlay that may display web-based content related to blockchain transactions or wallet management.
- iframe Elements: HTML-based inline frames that can load external web pages or interfaces within the overlay, providing additional functionalities such as third-party integrations.

The graphical elements 76 may also include web3 quests, where players can earn NFTs and tokens through their gameplay accomplishments. For example, details of the quest may be displayed within the overlay 16. Once the player has completed the details of the quest, the claims of the quest rewards may be completed within the game itself, through the overlay 16. That is, instead of merely showing the details of the quest in an external website (requiring players to claim the quest rewards outside of the game), the overlay 16 may be used to show quest rewards with the video game content.

The graphical elements 76 may be based on the overlay data 32 output by the local server 24. For example, the overlay data 32 may be based on the overlay query 72 and/or the response 30 from the external blockchain wallet 12. As described above, the graphical elements 76 may include, but are not limited to, one or more of transaction notifications, wallet creation modals, wallet import modals, wallet connect modals, webview elements, or iframe elements. These graphical elements 76 may serve to enhance the user interaction by providing pertinent information and actions within the context of the game, thereby maintaining an immersive gaming experience while facilitating blockchain interactions.

As an example, the processor circuitry 22 may be configured to handle authentication and connection establishment to the external blockchain wallet 12. Specifically, the graphical elements 76 generated in the overlay 16 may include a login interface designed to retrieve the necessary credentials from the user for connecting to the external blockchain wallet. Upon accessing the overlay request, the local server may output an overlay query that prompts the generation of an authentication window. This window may include fields for inputting user-specific details such as wallet addresses, secret keys, or biometric data. These credentials facilitate the connection between the video game client 14 and the external blockchain wallet 12, enabling secure interactions for subsequent transaction processing.

The computer device 10 may separate the video game client 14 from the external blockchain wallet 12 to ensure user asset security. For example, the video game client 14 may not have direct access to the external blockchain wallet 12 or its private keys. Instead, the local server 24 may act as an intermediary, processing requests from the video game client 14 and interacting with the external blockchain wallet 12 to perform required operations. In this way, the local server 24 may be used to mitigate the risk of unauthorized access and potential malicious actions that could compromise the user's external blockchain wallet 12 and assets while maintaining integration between the video game client 14 and the external blockchain wallet 12..

The entire process of hosting the local server, managing requests, and generating the overlay window may be accomplished by a single client application 80 (also referred to as an app) executed by the processor circuitry 22. The single client application 80 may consolidate all functionalities into one unified platform, simplifying deployment and operation for users. The architecture may ensure that all interactions-from receiving wallet and overlay requests to rendering the overlay window-are managed by a single application.

The range of wallet queries 28 that the video game client 14 can make to the external blockchain wallet 12 includes, but is not limited to, remote procedure calls (RPCs) and smart contract calls. RPCs allow the game client to execute specific functions on the blockchain, such as querying data or initiating transactions. Smart contract calls enable the execution of predefined protocols on the blockchain, such as transferring assets, accessing decentralized applications (dApps), or interacting with distributed ledgers. These wallet queries 28 may be formatted and sent by the local server 24 to the external blockchain wallet 12, which processes the queries accordingly and sends responses 30 back to the local server 24 for overlay generation and display.

The local server 24 may send wallet queries 28 to the external blockchain wallet 12 through various methods, which may include at least one of:
- Importing the External Blockchain Wallet: Synchronizing with existing wallets stored locally or on other devices.
- Establishing a Websocket Connection: Real-time communication with the external blockchain wallet via websocket protocols.
- Using a Software Development Kit (SDK): Leveraging SDKs such as MetaMask Mobile SDK or WalletConnect to establish and maintain connections with the external blockchain wallet. This may involve initiating and managing connections, signing transactions, and performing blockchain operations as required by the video game client.

The processor circuitry 22 may have various implementations. For example, the processor circuitry 22 may include any suitable device, such as a processor (e.g., CPU), programmable circuit, integrated circuit, memory and I/O circuits, an application specific integrated circuit, microcontroller, complex programmable logic device, other programmable circuits, or the like. The processor circuitry 22 may additionally include a graphics processing unit 46 as described above. The processor circuitry 22 may also include a non-transitory computer readable medium, such as random-access memory (RAM), a read-only memory (ROM), an erasable programmable read-only memory (EPROM or Flash memory), or any other suitable medium. Instructions for performing the method described below may be stored in the non-transitory computer readable medium and executed by the processor circuitry 22. The processor circuitry 22 may be communicatively coupled to the computer readable medium and network interface through a system bus, mother board, or using any other suitable structure known in the art.

The memory 20 (also referred to as a computer readable medium) may be, for example, one or more of a buffer, a flash memory, a hard drive, a removable media, a volatile memory, a non-volatile memory, a random-access memory (RAM), or other suitable device. In a typical arrangement, the memory 20 may include a non-volatile memory for long term data storage and a volatile memory that functions as system memory for the processor circuitry 22. The memory 20 may exchange data with the circuitry over a data bus. Accompanying control lines and an address bus between the memory 20 and the processor circuitry also may be present. The memory 20 is considered a non-transitory computer readable medium.

The computer device 10 may encompass a range of configurations and designs. For example, the computer device 10 may be implemented as a single device, such as a server, desktop computer, laptop, or other standalone units. These individual devices may incorporate essential components like a central processing unit (CPU), memory modules (including random-access memory (RAM) and read-only memory (ROM)), storage devices (like solid-state drives or hard disk drives), and various input/output (I/O) interfaces. Alternatively, the computer device might constitute a network of interconnected computer devices, forming a more complex and integrated system. This could include server clusters, distributed computing environments, or cloud-based infrastructures, where multiple devices are linked via network interfaces to work cohesively, often enhancing processing capabilities, data storage, and redundancy.

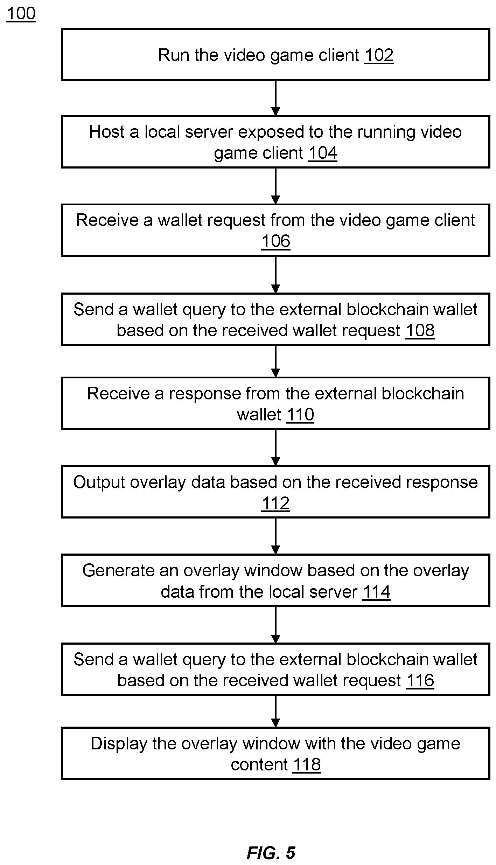

Turning to FIG. 5, a method 100 performed by processor circuitry is shown for enhancing interactions between video games and blockchain wallets by establishing a connection between an external blockchain wallet and a video game client while presenting an overlay on the video game client. The method comprises a sequence of steps executed by processor circuitry of a computer device to achieve these functionalities.

In step 102, the processor circuitry runs the video game client. The video game client is stored within the memory of the computer device and executed by the processor circuitry. This execution initiates the game environment for the user, allowing for interaction within the game.

In step 104, the processor circuitry hosts a local server that is exposed to the running video game client. This local server acts as an intermediary that manages requests originating from the video game client and interfaces with the external blockchain wallet. The local server operates concurrently with the video game client to ensure seamless integration and real-time processing of requests.

In step 106, the local server receives a request from the video game client, where the request comprises a wallet request intended for the external blockchain wallet. This wallet request may encompass various functions such as transaction execution, balance queries, and other blockchain interactions pertinent to the game's requirements.

In step 108, upon receiving the wallet request, the local server generates a wallet query based on the received wallet request and sends this query to the external blockchain wallet. As is described above, the wallet query may be formatted appropriately to ensure compatibility with the external blockchain wallet's communication protocols and data structures.

The external blockchain wallet processes the wallet query and returns a response to the local server. This response may include information or results pertinent to the original wallet request, such as transaction confirmation, account balances, or other blockchain-related data.

In step 110, the local server receives the response from the external blockchain wallet and outputs overlay data based on the received response. This overlay data may be used to generate a visual representation of the blockchain interaction, presented to the user within the context of the game.

In step 112, the processor circuitry generates an overlay window based on the overlay data output by the local server. This overlay window may be designed to include various graphical elements that visually represent the blockchain interaction results, such as transaction notifications, wallet information, and authentication prompts.

In step 114, the processor circuitry displays the overlay window on the video game client. The overlay window may be superimposed on the video game client, providing real-time feedback and interaction options to the user without disrupting the gaming experience. This may be used to allow the user to perform blockchain transactions and view related information within the game environment.

Overall, the method enables efficient and secure interactions between video games and external blockchain wallets, enhancing the gaming experience by integrating decentralized ledger technologies directly into the game client via a streamlined and user-friendly overlay.

The method 100 described herein may be performed using any suitable computerized device. For example, the method may be executed on a desktop computer, a laptop, a server, a mobile device, a tablet, or any other computing device capable of executing software instructions. The device may include a processor, memory, storage, input/output interfaces, and other standard components necessary for executing the method. The method 100 is designed to be platform-independent and can be implemented on various operating systems, such as Windows, macOS, Linux, or mobile operating systems like iOS and Android. Furthermore, the method may also be performed in a distributed computing environment, where multiple interconnected devices work collaboratively to execute the computational steps of the method.

All ranges and ratio limits disclosed in the specification and claims may be combined in any manner. Unless specifically stated otherwise, references to "a," "an," and/or "the" may include one or more than one, and that reference to an item in the singular may also include the item in the plural.

Although the invention has been shown and described with respect to a certain embodiment or embodiments, equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

## Claims

1. A computer device for improving interactions between video games and blockchain wallets by establishing a connection between an external blockchain wallet and a video game client and by displaying an overlay on the video game client, the computer device comprising:
memory comprising a non-transitory computer readable medium storing the video game client; and
processor circuitry configured to:
run the video game client;
host a local server exposed to the running video game client, and configured to:
receive a request from the video game client comprising a wallet request to the external blockchain wallet;
send a wallet query to the external blockchain wallet based on the received wallet request; and
receive a response from the external blockchain wallet in reply to the sent wallet query; and
output overlay data based on the received response;
generate an overlay window based on the overlay data output from the local server; and
display the overlay window.

2. The computer device of claim 1, wherein:
the processor circuitry is further configured to run an internet browser including a browser extension;
the browser extension is configured to access the external blockchain wallet; and
the local server sends the wallet query to the external blockchain wallet via the browser extension.

3. The computer device of claim 1, wherein:
the generating of the overlay window includes:
rendering a transparent window based on the overlay data output by the local server;
generating an image from the rendered transparent window;
inject the generated image into a graphical output from the video game client, such that the generated image is displayed with the graphical output from the video game client as the overlay window, and, preferably, the generated image is injected into the graphical output from the video game client via DLL injection; or
the generating of the overlay window includes rendering a transparent window based on the overlay data output by the local server, such that the rendered transparent window is displayed over the video game client.

4. The computer device of claim 1, wherein the wallet query is generated by formatting the received wallet request using a convenience library.

5. The computer device of claim 1, wherein:
the hosted local server is further configured to:
receive a request from the video game client comprising an overlay request; and
output an overlay query based on the overlay request;
the generation of the overlay window based on the overlay data output by the local server includes displaying in the overlay window graphical elements based on the outputted overlay query, and, optionally, the graphical elements include a login for retrieving credentials for connecting to the external blockchain wallet.

6. The computer device of claim 1, wherein the overlay window includes at least one of transaction notifications, wallet creation modals, wallet import modals, wallet connect modals, webview elements, or iframe elements.

7. The computer device of claim 1, wherein the video game client does not have direct access to the external blockchain wallet.

8. The computer device of claim 1, wherein the hosting of the local server and the generation of the overlay window is performed by the processor circuitry executing a single client application.

9. The computer device of claim 1, wherein:
the wallet query sent to the external blockchain wallet includes at least one of remote procedure calls or smart contract calls; or
wherein the local server sends the wallet query to the external blockchain wallet by at least one of importing the external blockchain wallet, connecting to the external blockchain wallet by establishing a websocket connection to the to external blockchain wallet, or connecting to the external blockchain wallet using a software development kit (SDK).

10. A method performed by processor circuitry for improving interactions between video games and blockchain wallets by establishing a connection between an external blockchain wallet and a video game client and by displaying an overlay on the video game client, the method comprising:
running the video game client with the processor circuitry;
hosting with the processor circuitry a local server exposed to the running video game client;
receiving by the local server a request from the video game client comprising a wallet request to the external blockchain wallet;
sending with the local server a wallet query to the external blockchain wallet based on the received wallet request;
receive with the local server a response from the external blockchain wallet in reply to the sent wallet query;
outputting overlay data with the local server based on the received response;
generating with the processor circuitry an overlay window based on the overlay data output by the local server; and
displaying the overlay window.

11. The method of claim 10, further comprising running with the processor circuitry an internet browser including a browser extension, wherein:
the browser extension is configured to access the external blockchain wallet; and
the local server sends the wallet query to the external blockchain wallet via the browser extension.

12. The method of claim 10, wherein the generating of the overlay window includes:
rendering with the processor circuitry a transparent window based on the overlay data output by the local server;
generating with the processor circuitry an image from the rendered transparent window;
injecting with the processor circuitry the generated image into a graphical output from the video game client, such that the generated image is displayed with the graphical output from the video game client as the overlay window, and, optionally, wherein the generated image is injected into the graphical output from the video game client via **DLL** injection.

13. The method of claim 10, wherein the wallet query is generated by the processor circuitry formatting the received wallet request using a convenience library.

14. The method of claim 10, further comprising:
receiving with the local server a request from the video game client comprising an overlay request; and
outputting with the local server an overlay query based on the overlay request;
wherein the generation of the overlay window based on the overlay data output by the local server includes displaying in the overlay window graphical elements based on the outputted overlay query.

15. The method of claim 10, wherein the processor circuitry hosting the local server and generating the overlay window is performed by the processor circuitry executing a single client application.
